# EUROPÄISCHE PATENTSCHRIFT

(11) **EP 2 504 113 B1**
(45) Veröffentlichungstag und Bekanntmachung des Hinweises auf die Patenterteilung: **14.05.2014**
(21) Anmeldenummer: 10782231.4
(22) Anmeldetag: 12.11.2010
(51) Int. Cl.: B21B 21/00

(54) **ANTRIEB FÜR EINE PILGERWALZANLAGE**
DRIVE FOR A PILGER ROLLER SYSTEM
ENTRAÎNEMENT POUR UN LAMINOIR À PAS DE PÈLERIN

(30) Priorität: 24.11.2009 DE 102009047049
(43) Veröffentlichungstag der Anmeldung: 03.10.2012
(60) Teilanmeldung: 14162302.5
(73) Patentinhaber: Sandvik Materials Technology Deutschland GmbH, 40549 Düsseldorf (DE)
(72) Erfinder: FROBÖSE, Thomas, 33775 Versmold (DE)
(74) Vertreter: WSL Patentanwälte Partnerschaft mbB
(86) Internationale Anmeldenummer: PCT/EP2010/067413
(87) Internationale Veröffentlichungsnummer: WO 2011/064113

(56) Entgegenhaltungen:
- EP-A1- 2 216 107
- DE-A1- 1 815 521
- DE-A1- 4 336 422
- US-A- 3 688 540
- US-A- 4 037 444

## Beschreibung

Die vorliegende Erfindung betrifft eine Pilgerwalzanlage mit einem Walzgerüst, einem Schwungrad auf einer Antriebswelle, welches um eine Drehachse drehbar gelagert ist, und einer Schubstange mit einem ersten und einem zweiten Ende, wobei das erste Ende der Schubstange in einem radialen Abstand von der Drehachse an dem Schwungrad befestigt ist und wobei das zweite Ende der Schubstange an dem Walzgerüst befestigt ist, so dass im Betrieb der Anlage eine Drehbewegung des Schwungrades in eine Translationsbewegung des Walzgerüsts umgesetzt wird, mit einem Antriebsmotor der eine Motorwelle aufweist, wobei die Motorwelle des Antriebsmotors und die Antriebswelle so miteinander verbunden sind, dass eine Drehbewegung der Motorwelle zu einer Drehbewegung der Antriebswelle führt und so der Antriebsmotor das Schwungrad antreibt.

Zur Herstellung von präzisen Metallrohren, insbesondere aus Stahl, wird ein ausgedehnter hohlzylindrischer Rohling durch Druckspannungen reduziert. Dabei wird der Rohling zu einem Rohr mit definiertem reduzierten Außendurchmesser und einer definierten Wanddicke umgeformt.

Das am Weitesten verbreitete Reduzierverfahren für Rohre ist als Kaltpilgern bekannt, wobei der Rohling Luppe genannt wird. Die Luppe wird, im vollständig erkalteten Zustand, beim Walzen über einen kalibrierten, d.h. den Innendurchmesser des fertigen Rohrs aufweisenden Walzdorn geschoben und dabei von außen von zwei kalibrierten, d.h. den Außendurchmesser des fertigen Rohrs definierenden Walzen umfaßt und in Längsrichtung über den Walzdorn ausgewalzt.

Während des Kaltpilgerns erfährt die Luppe einen schrittweisen Vorschub in Richtung auf den Walzdorn zu bzw. über diesen hinweg, während die Walzen drehend über den Dorn und damit die Luppe horizontal hin und her bewegt werden. Dabei wird die Horizontalbewegung der Walzen durch ein Walzgerüst vorgegeben, an dem die Walzen drehbar gelagert sind. Die Walzen erhalten ihre Drehbewegung durch eine relativ zum Walzgerüst feststehende Zahnstange, in die fest mit den Walzenachsen verbundene Zahnräder eingreifen. Der Vorschub der Luppe über den Dorn erfolgt mit Hilfe eines Vorschubspannschlittens, welcher eine Translationsbewegung in einer Richtung parallel zur Achse des Walzdorns ermöglicht. Der lineare Vorschub des Vorschubspannschlittens in den bekannten Kaltpilgerwalzanlagen wird mit Hilfe eines Kugelgewindetriebs erreicht. Dabei besteht der Kugelgewindetrieb aus einem Servomotor, einem Getriebe, einer Trapezgewindespindel, den zugehörigen Lagerpunkten und entsprechender Schmierung sowie einer Trapezgewindespindelmutter. Der Servomotor ist in einer Kupplung mit dem Getriebe und über eine weitere Kupplung mit der Trapezgewindespindel selbst verbunden. Die Drehbewegung der Gewindespindel wird mit Hilfe der Trapezgewindespindelmutter in eine Translationsbewegung umgesetzt. Dabei ist die Trapezgewindespindelmutter mit dem Vorschubspannschlitten verbunden, so dass sich bei der Drehung der Spindel die Spindelmutter und mit ihr der Vorschubspannschlitten in eine Translationsbewegung auf den Walzdorn hinbewegt. Zur Führung des Vorschubspannschlittens sind zusätzlich zu dem Spindelantrieb Führungsschienen vorgesehen, welche die Translationsrichtung des Vorschubspannschlittens vorgeben.

Die im Walzgerüst übereinander angeordneten konisch kalibrierten Walzen drehen sich entgegen der Vorschubrichtung des Vorschubspannschlittens. Das von den Walzen gebildete sogenannte Pilgermaul erfaßt die Luppe und die Walzen drücken von außen eine kleine Werkstoffwelle ab, die vom Glättkaliber der Walzen und dem Walzdorn zu der vorgesehenen Wanddicke ausgestreckt wird, bis das Leerlaufkaliber der Walzen das fertige Rohr freigibt. Während des Walzens bewegt sich das Walzgerüst mit den daran befestigten Walzen entgegen der Vorschubrichtung der Luppe. Mit Hilfe des Vorschubspannschlittens wird die Luppe nach dem Erreichen des Leerlaufkalibers der Walzen um einen weiteren Schritt auf den Walzdorn hin vorgeschoben, während die Walzen mit dem Walzgerüst in ihre horizontale Ausgangslage zurückkehren. Gleichzeitig erfährt die Luppe eine Drehung um ihre Achse, um eine gleichmäßige Form des fertigen Rohrs in Umfangrichtung zu erreichen. Durch mehrfaches Überwalzen jedes Rohrabschnitts wird eine gleichmäßige Wanddicke und Rundheit des Rohrs sowie gleichmäßige Innen- und Außendurchmesser erreicht.

Während wie oben beschrieben, der lineare Vorschub des Vorschubspannschlittens in bekannten Kaltpilgerwalzanlagen mit Hilfe eines Kugelgewindetriebs oder alternativ auch ein Linearantrieb bewirkt wird, wird die horizontale Hin- und Herbewegung des Walzgerüsts mit Hilfe eines Kurbeltriebs erreicht. Dabei besteht der Kurbeltrieb aus einem Getriebe, einem Schwungrad, einer Schubstange und entsprechender Schmierung, wobei der Kurbeltrieb von einem Elektromotor angetrieben wird. Der Elektromotor ist über eine Kupplung mit dem Getriebe und über eine weitere Kupplung mit dem Schwungrad verbunden. An einem ersten Ende ist die Schubstange mit Hilfe eines Lagers, exzentrisch zur Drehachse mit dem Schwungrad verbunden. Das zweite Ende der Schubstange ist ebenfalls mit Hilfe eines Lagers mit dem Walzgerüst verbunden, so dass die Drehbewegung des Schwungrades in eine Translationsbewegung des Walzgerüsts umgesetzt wird. Dabei ist die Translationsrichtung des Walzgerüsts durch Führungsschienen vorgegeben.

Zur Herstellung präzise gefertigter Rohre ist sowohl ein genauer und kontrollierter schrittweiser Vorschub des Vorschubspannschlittens als auch eine genaue und kontrollierte Translationsbewegung des Walzgerüsts unerläßlich. Insbesondere die Umwandlung eines großen Drehmomentes in eine lineare Kraft in Translationsrichtung unterliegt hohen Ansprüchen. Daher wird im Stand der Technik zum Antreiben des Kurbeltriebs ein Antriebsstrang mit einer Untersetzung gewählt. Die Untersetzung verhindert geringe Translationsgeschwindigkeiten des Walzgerüstes und führt in Kombination mit dem, durch die Untersetzung implizierten, großen Spiel dazu, dass eine genaue Positionierung des Walzgerüstes erschwert wird. Ein solches langsames und präzises Verfahren des Walzgerüstes wird jedoch zum Kaltpilgem von Rohren mit kleinen Nenndurchmessern unbedingt benötigt, da es sonst zu Unregelmäßigkeiten bei der Herstellung dieser Rohre mit kleinen Durchmessern kommen kann.

Eine Pilgerwalzanlage mit einem solchen konventionellen Antrieb für das Walzgerüst ist beispielsweise aus der DE 43 36 422 A1 bekannt.

Die EP 2 216107 A1 als nachveröffentlichter Stand der Technik im Sinne des Art. 54(3) EPÜ offenbart ein Antriebssystem für ein Walzwerk, insbesondere für ein Kaltpilgerwalzwerk, mit einem hin- und her bewegbaren Walzgerüst sowie zwei Einheiten bestehend aus jeweils einem Kurbeltrieb; einem Kurbelarm mit Ausgleichsgewicht als Schwungrad zum zumindest teilweisen Ausgleich der vom Walzgerüst erzeugten Massenkräfte, einem Antrieb und einer Schubstange, die das Walzgerüst und den Kurbelarm gelenkig mit einander verbindet. Dabei weist jede der beiden Einheiten einen eigenen Antrieb in Form eines Elektromotors auf, der den jeweiligen Kurbeltrieb ohne Zwischenschaltung eines Getriebes antreibt.

Die im Getriebe auftretende Reibung führt zur Energie- und Leistungsverlusten, sowie zu einem Verschleiß des Getriebes selbst, so dass in regelmäßigen Abständen das gesamte Getriebe oder zumindest Teile davon ausgetauscht werden müssen. Dieser Austausch erzeugt hohe Montage- und Ersatzteilkosten, wobei auch die Stillstandszeiten der Walzanlage als Folgekosten berücksichtigt werden müssen.

Vor diesem Hintergrund liegt der vorliegenden Erfindung die Aufgabe zugrunde, eine Pligerwalzanlage bereitzustellen, deren Antrieb für das Walzgerüst keinen oder einen nur sehr geringen Verschleiß aufweist und der darüber hinaus ein präzises Verfahren des Walzgerüsts mit einer hohen Wiederholgenauigkeit ermöglicht.

Diese Aufgabe wird erfindungsgemäß durch eine Pilgerwalzanlage gelöst mit einem Walzgerüst, einem Schwungrad auf einer Antriebswelle, welches um eine Drehachse drehbar gelagert ist, und einer Schubstange mit einem ersten und einem zweiten Ende, wobei das erste Ende der Schubstange in einem radialen Abstand von der Drehachse an dem Schwungrad befestigt ist und wobei das zweite Ende der Schubstange an dem Walzgerüst befestigt ist, so dass im Betrieb der Anlage eine Drehbewegung des Schwungrades in eine Translationsbewegung des Walzgerüsts umgesetzt wird, mit einem Antriebsmotor der eine Motorwelle aufweist, wobei die Motorwelle des Antriebsmotors und die Antriebswelle so miteinander verbunden sind, dass eine Drehbewegung der Motorwelle zu einer Drehbewegung der Antriebswelle führt und so der Antriebsmotor das Schwungrad antreibt, wobei der Antriebsmotor ein Torque-Motor ist, wobei die Motorwelle und die Antriebswelle einstückig ausgeführt sind oder über ein Kupplung miteinander verbunden sind, so dass die Motorwelle und die Antriebswelle so miteinander verbunden sind, dass eine volle Umdrehung der Motorwelle eine volle Umdrehung der Antriebswelle bewirkt.

Ein solcher Antriebsmotor, insbesondere ein Torque- oder Hohlwellenmotor, weist den Vorteil auf, dass er das Schwungrad direkt antreibt und das Getriebe aus dem Stand der Technik über flüssig macht. Reibungsverluste und Verschleißerscheinungen werden auf diese Weise reduziert. Weiterhin wird auch die Anzahl der mechanischen Komponenten deutlich reduziert, was unter anderem die durch Lagerhaltung von Ersatzteilen entstehenden Kosten reduziert. Die durch mögliche Reparaturen bedingte Stillstandszeit der Anlage wird begrenzt. Ein Torque-Motor stellt ein hohes Drehmoment bei kleiner Drehzahl und kompakten Bauvolumen bereit. Der hier verwendeten Torque-Motor kann sowohl als Synchron- oder Asynchronmotor realisiert sein.

In einer Ausführungsform der Erfindung ist die Pilgerwalzanlage eine Kaltpilgerwalzanlage.

Ist die Motor- und die Antriebswelle einstückig ausgeführt, so wirkt sich dies vorteilhaft auf den Antrieb des Walzgerüsts aus, da weder ein Kupplungsspiel noch zusätzliche Komponenten vorhanden sind. Der Wegfall von Komponenten, wie beispielsweise Zahnrädern, reduziert den Schmierungsbedarf, den Verschleiß und damit eng verbunden auch den Wartungsaufwand, sowie die Kosten für Lager- und Instandhaltung.

In einer weiteren Ausführungsform ist der Antriebsmotor ein Hohlwellenmotor, beispielsweise ein Torque-Motor im Sinne der vorliegenden Anmeldung, dessen Rotor hohlförmig ausgebildet ist, so dass der Rotor beispielsweise direkt auf die Motorwelle aufgeschoben und dort fixiert werden kann. Das Drehmoment des Antriebsmotor wird damit direkt auf die Motorwelle übertragen.

In einer weiteren Ausführungsform sind die Motorwelle und die Antriebswelle des Schwungrades über eine Kupplung kraftschlüssig miteinander verbunden.

In einer weiteren Ausführungsform sind die Motorwelle des Antriebsmotors und die Antriebswelle des Schwungrades formschlüssig über eine Kupplung miteinander verbunden. Formschlüssige Kupplungen weisen den Vorteil auf, dass sie einfach und ohne großen Kraftaufwand getrennt werden können. Dabei wird durch das ineinander greifen von Teilkonturen der zu verbindenden Bauteile, insbesondere Zähnen und Klauen die Bewegung der zwei Bauteile relativ zu einander stark eingeschränkt. Die Wirkung des Formschlusses ist insbesondere von der Geometrie und den Materialeigenschaften der ineinander greifenden Teilkonturen abhängig. Der Kraftübertrag erfolgt entlang einer Vorzugsrichtung, während entegegengesetzt zu dieser Vorzugsrichtung, die formschlüssige Verbindung gelöst wird. Der Nachteil des Wartungsaufwandes steht dabei dem Nutzen durch den einfachen Austausch von Komponenten und den geringen Produktionskosten solcher Kupplungen gegenüber.

In einer Ausführungsform ist die Motorwelle des Antriebsmotors und die Antriebswelle des Schwungrades über eine Kupplung miteinander verbunden, wobei die Kupplung ein Kegelradgetriebe ist. Vorteilhaft ist bei dieser Art der Ausführungsform, dass die Drehachse der Motorwelle des Motors und die Drehachse der Antriebswelle des Schwungrades nicht parallel zueinander sein müssen. Die Lage der Drehachsen der Welle des Antriebmotors und der Welle des Schwungrades schließen einen Winkel ein, der jedoch nicht die Drehzahl und auch nicht das Übersetzungsverhältnis zwischen den zwei Wellen beeinflusst. Besonders Vorteilhaft ist hierbei, dass die räumliche Anordnung von Antriebsmotor und Schwungrad flexibel ist und somit der Platzbedarf des Antriebs für das Walzgerüst an die Gegebenheiten des Aufstellungsortes angepasst werden kann, wobei teuere Umbaukosten vermieden werden.

Eine volle Umdrehung der Motorwelle bewirkt eine volle Umdrehung der Antriebswelle. Mit anderen Worten zwischen Antriebsmotor und Schwungrad keine Getriebeunter oder übersetzung vorgesehen.

Eine weitere Ausführungsform weist eine Lagerung der Motorwelle und/oder der Antriebswelle des Schwungrades auf, so dass Bewegungen in einer Richtung senkrecht zur Welle und/oder in Längsrichtung der Welle gedämpft werden. Dabei wird unter einer Dämpfung im Sinne der vorliegenden Erfindung eine vollständige oder teilweise Absorption oder eine vollständige oder teilweise Weiterleitung von Kräften, die nicht den Wirkungsgrad des Antriebes erhöhen, verstanden.

Weist der Antriebsmotor einen Rotor und einen Stator auf, so ist es in einer Ausführungsform von Vorteil, wenn der Stator eine Lagerung aufweist, welche das auf den Stator ausgeübte (Gegen-) Drehmoment aufnimmt, wobei die Lagerung ein Dämpfungselement aufweist. Durch die Dämpfung können beispielsweise Unwuchten in der Rotationsbewegung und/oder Drehmomentschwankungen reduziert werden, so dass die Wirkung von Kräften und Momenten die den Wirkungsgrad des Antriebsmotor mindern, reduziert werden. Der Antriebsmotor kann so auf der einen Seite vor einem erhöhten Verschleiß geschützt werden und auf der anderen Seite kann der Stator die Drehmomente präziser auf den Rotor und damit auf die Motorwelle übertragen.

In einer Ausführungsform werden insbesondere Unwuchten und Drehmomentschwankungen gegenüber dem Antriebsmotor und/oder der Antriebswelle und/oder der Motorwelle durch die Lagerungselemente ausgeglichen. Dies kann Helfen den Verschleiß des gelagerten Bauteils zu reduzieren und führt zu Einsparungen von Reparatur- und Instandsetzungskosten.

Ein solches Lagerungselement kann z.B. ein als Austragung ausgestalteter Abschnitt des zu dämpfenden Bauteils und zwei Dämpfungselemente aufweisen. Die Dämpfungselemente können in diesem Fall die Austragung von zwei gegenüberliegenden Seiten einfassen, so dass Bewegungen, Kräfte und Momente, die in der Verbindungslinie der zwei Dämpfungselemente wirken, reduziert werden können. Eventuell auftretende Querkräfte bzw. Kraftkomponenten quer zu der Verbindungslinie können je nach Ausführung der Dämpfungselement und deren Anordnung gegenüber der Austragung ebenfalls reduziert werden.

Erfindungsgemäß ist es in einer Ausführungsform vorteilhaft, wenn der Antriebsmotor ein Gehäuse aufweist, wobei der Stator über das Dämpfungselement mit dem Gehäuse verbunden ist.

Beispielsweise ist es in einer Ausführungsform vorteilhaft, dass der Antriebsmotor ein Gehäuse aufweist, wobei der Stator mit dem Gehäuse verbunden ist und wobei das Gehäuse über das Dämpfungselement mit einer Halterung, vorzugsweise einem Gehäuse des Kurbeltriebs, verbunden ist, so dass Drehmomentschwankungen und/oder Unwuchten gegenüber der Halterung abgestützt werden.

In einer Ausführungsform weist das Dämpfungselement einen elastisch verformbaren Materialabschnitt auf. Die dämpfenden Eigenschaften des Dämpfungselementes hängen dann von dem verwendeten Material und dessen Ausgestaltung ab und können während dem Betrieb nur eingeschränkt beeinflusst werden. Ein Beispiel für ein solches passives Dämpfungselement ist ein Gummipuffer.

Aktive Lagerungselemente, wie sie in einer weiteren Ausführungsform eingesetzt werden, weisen beispielsweise pneumatische oder hydraulische Dämpfungselemente auf. Die Wirkung solcher Dämpfungselemente kann z.B. durch eine Regelung und/oder Steuerung während dem Betrieb an die jeweilige Betriebssituation angepasst werden. Beispielsweise durch die Bereitstellung eines Gegendruckes bzw. einer Gegenkraft können auch große Kräfte und Drehmomente ausgeglichen werden. Mit einer entsprechenden Sensorik ist es auch denkbar, dass den Betriebsablauf negativ beeinflussende Kräfte- und Drehmomente erfasst werden und dynamisch mit den aktiven Dämpfungselementen vermindert werden.

In einer Ausführungsform der Erfindung sind die einzelnen Bewegungen des Vorschubspannschlittens (Vorschub und Rotation der Luppe) sowie die Vor- und Zurückbewegung des Walzgerüsts mit voneinander zunächst unabhängigen Antrieben realisiert. Daher ist es in einer Ausführungsform vorteilhaft, dass der Antriebsmotor, insbesondere der Antriebsmotor für das Walzgerüst, und wenigstens ein weiterer Antriebsmotor, insbesondere der Antriebsmotor für den Vorschubspannschlitten, über elektronische Schnittstellen miteinander verbunden sind, wobei ein im Sinne des Walzprozesses synchronisierter Betrieb der wenigstens zwei Antriebsmotoren möglich ist.

Weitere Vorteile, Merkmale und Anwendungsmöglichkeiten der vorliegenden Erfindung werden anhand der folgenden Beschreibung bevorzugter Ausführungsformen und den dazugehörigen Figuren deutlich.
Figur 1 zeigt eine Seitenansicht des schematischen Aufbaus einer Kaltpilgerwalzanlage gemäß einer Ausführungsform der vorliegenden Erfindung.
Figur 2 zeigt eine seitliche Schnittansicht eines Antriebsstranges des Walzgerüsts einer Pilgerwalzanlage gemäß einer Ausführungsform der vorliegenden Erfindung.
Figur 3 zeigt einen Längsschnitt durch den Antriebsstrang in einer alternativen Ausführungsform.
Figur 4 zeigt einen Längsschnitt durch den Antriebsstrang in einer weiteren Ausführungsform.
Figur 5 zeigt eine Gruppenzeichnung einer erfindungsgemäßen Anordnung eines Antriebsmotors an einer Halterung.

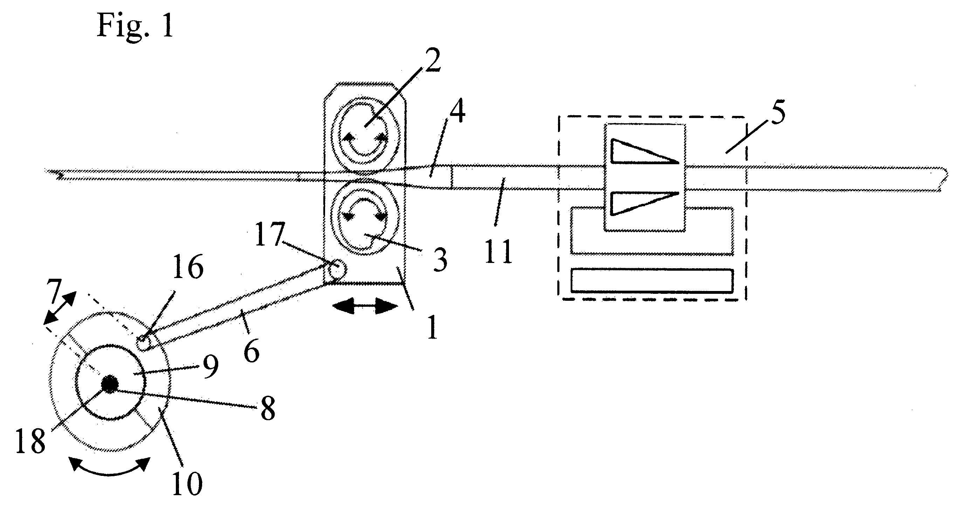

In Figur 1 ist schematisch der Aufbau einer erfindungsgemäßen Pilgerwalzanlage in einer Seitenansicht dargestellt. Die Walzanlage besteht aus einem Walzgerüst 1 mit Walzen 2, 3, einem kalibrierten Walzdorn 4 sowie einem Antrieb für das Walzgerüst 1. Der Antrieb für das Walzgerüst 1 weist eine Schubstange 6, ein Antriebsmotor 9 und ein Schwungrad 10 auf. Ein Erstes Ende der Schubstange 6 ist exzentrisch zur Drehachse der Antriebswelle 8 an dem Schwungrad 10 befestigt.

In der dargestellten Ausführungsform fällt die Drehachse 18 der Motorwelle 8a mit der Drehachse der Antriebswelle 8b des Schwungrades 10 zusammen.

Dreht sich der Rotor des Antriebsmotors, so bildet sich ein Drehmoment aus, dass auf die mit dem Rotor verbundene Motorwelle 8a übertragen wird. Die Motorwelle 8a ist mit dem Schwungrad 10 des Antriebsstrang derart verbunden, dass das Drehmoment auf das Schwungrad 10 übertragen wird. In Folge des Drehmomentes rotiert das Schwungrad 10 um seine Drehachse. Die an dem ersten Ende 16 des Schwungrades mit einem Lager, in einem radialen Abstand 7 angeordnete Schubstange 6 erfährt eine tangentiale Kraft und überträgt diese auf das zweite Schubstangenende 17. Das mit dem zweiten Schubstangenende 17 verbundene Walzgerüst 1 wird entlang der, durch die Führungsschiene des Walzgerüsts 1 festgelegten Verfahrrichtung bewegt.

Während des Kaltpilgerns auf der in Figur 1 gezeigten Walzanlage erfährt die Luppe 11 einen schrittweisen Vorschub in Richtung auf den Walzdorn 4 zu bzw. über diesen hinweg, während die Walzen 2, 3 drehend über den Dorn und damit über die Luppe 11 horizontal hin- und herbewegt werden. Dabei wird die Horizontalbewegung der Walzen 2, 3 durch ein Walzgerüst 1 vorgegeben, an dem die Walzen 2, 3 drehbar gelagert sind. Das Walzgerüst 1 wird in einer Richtung parallel zum Walzdorn 4 hin- und herbewegt, während die Walzen 2, 3 selbst ihre Drehbewegung durch eine relativ zum Walzgerüst 1 feststehende Zahnstange erhalten, in die fest mit den Walzenachsen verbundene Zahnräder eingreifen. Der Vorschub der Luppe 11 über den Dorn erfolgt mit Hilfe des Vorschubspannschlittens 5, welcher eine Translationsbewegung in einer Richtung parallel zur Achse des Walzdorns 4 ermöglicht. Die im Walzgerüst 1 übereinander angeordneten konisch kalibrierten Walzen 2, 3 drehen sich entgegen der Vorschubrichtung des Vorschubspannschlittens 5. Das von den Walzen 2, 3 gebildete sogenannte Pilgermaul erfaßt die Luppe 11 und die Walzen 2, 3 drücken von außen eine kleine Werkstoffwelle ab, die von einem Glättkaliber der Walzen 2, 3 und dem Walzdorn 4 zu der vorgesehen Wanddicke ausgestreckt wird, bis ein Leerlaufkaliber der Walzen 2, 3 das fertige Rohr freigibt. Während des Walzens bewegt sich das Walzgerüst 1 mit den daran befestigten Walzen 2, 3 entgegen der Vorschubrichtung der Luppe 11. Mit Hilfe des Vorschubspannschlittens 5 wird die Luppe 11 nach dem Erreichen des Leerlaufkalibers der Walzen 2, 3 um einen weiteren Schritt auf den Walzdorn 4 hin vorgeschoben, während die Walzen 2, 3 mit dem Walzgerüst 1 in ihre horizontale Ausgangslage zurückkehren. Gleichzeitig erfährt die Luppe 11 eine Drehung um ihre Achse, um eine gleichmäßige Form des fertigen Rohrs zu erreichen. Durch mehrfaches Überwalzen jedes Rohrabschnittes wird eine gleichmäßige Wanddicke und Rundheit des Rohrs sowie gleichmäßige Innen- und Außendurchmesser erreicht.

Eine zentrale Ablaufsteuerung steuert die zunächst unabhängigen Antriebe der Walzanlage, so dass der zuvor beschriebene Ablauf des Walzprozesses erzielt wird. Die Steuerung beginnt mit dem Auslösen eines Vorschubschrittes des Antriebs des Vorschubspannschlittens 5 zum Vorschieben der Luppe 11. Nach Erreichen der Vorschubposition wird der Antrieb so angesteuert, dass er den Vorschubspannschlitten 5 statisch hält. Die Drehgeschwindigkeit des Antriebsmotors 9 für das Walzgerüst 1 wird so gesteuert, daß gleichzeitig mit dem Vorschubschritt der des Vorschubspannschlittens 5 das Walzgerüst 1 in seine Ausgangslage zurückgeführt wird, während nach dem Abschluß des Vorschubschritts das Walzgerüst 1 horizontal über der Luppe 11 verschoben wird, wobei die Walzen 2, 3 die Luppe 11 erneut auswalzen. Beim Erreichen des Umkehrpunktes des Walzgerüsts 1 wird der Antrieb des Spannfutters derart angesteuert, daß die Luppe 11 um den Dorn 4 gedreht wird.

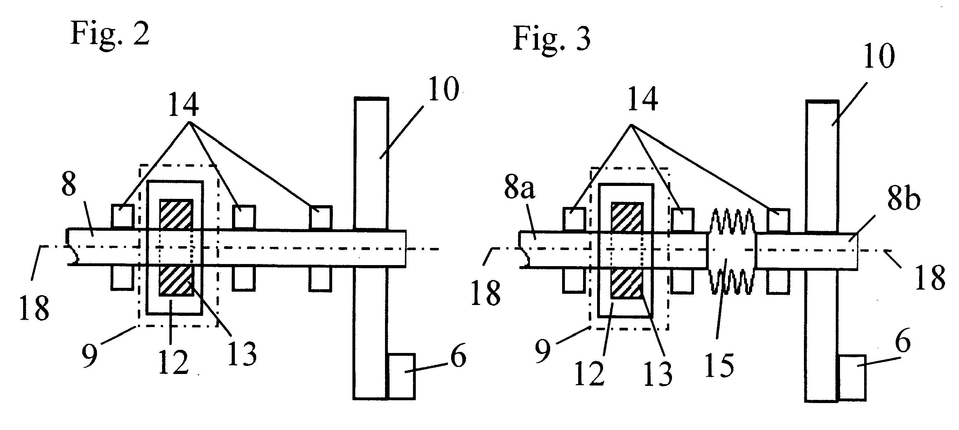

Die Anordnung des Antriebsmotors 9 und des Schwungrades 10, bei der die Motorwelle 8a des Antriebsmotors und die Antriebswelle 8b des Schwungrades 10 einstückig ausgebildet sind, ist in der Längsschnittansicht einer Ausführungsform in Figur 2 dargestellt. Der mit der einstückigen Welle 8 verbundene Rotor 13 treibt über die elektromagnetischen Wechselwirkungen mit dem Stator 12 des Antriebsmotors 9 das Schwungrad 10 an. Dabei ist es ausführungsgemäß vorteilhaft, daß der Einfluß von Störkräften, d.h. Kräfte, die senkrecht oder in Längsrichtung der Drehachse der einstückigen Welle 8 den Wirkungsgrad des Antriebes negativ beeinflussen, durch eine Lagerung der einstückigen Welle 8 mit Lagern 14, reduziert wird. Eine Beschädigung von Baukomponenten durch Vibrationen wird dadurch weitestgehend vermieden.

In Figur 3 ist der Antriebsstrang in einer alternativen Ausführungsform dargestellt. Dabei ist der Rotor 13 des Antriebsmotors 9 mit der Motorwelle 8a verbunden. Der Stator 12 des Antriebsmotors 9 tritt in Wechselwirkung mit dem Rotor 13 und treibt so die Motorwelle 8a an. Über eine Kupplung 15 ist die Motorwelle 8a mit der Antriebswelle 8b des Schwungrades 10 verbunden, so dass eine Rotation der Motorwelle 8a des Motors eine Rotation der Antriebswelle 8b des Schwungrades 10 bewirkt. Die Rotation der Antriebswelle 8b des Schwungrades 10 führt zu einer Rotation des Schwungrades 10 selbst. Ausführungsgemäß entspricht die Drehachse der Motorwelle 8a der Drehachse der Antriebswelle 8b des Schwungrades 10. Weiter ist in Figur 3 gezeigt, dass die Motorwelle 8a und die Antriebswelle 8b des Schwungrades 10 über getrennte Lager 14 vor den Auswirkungen negativer Störkräfte senkrecht zur Drehachse der Wellen 8a, 8b und/oder in Längsrichtung der Drehachse der Wellen 8a, 8b zumindest teilweise geschützt ist.

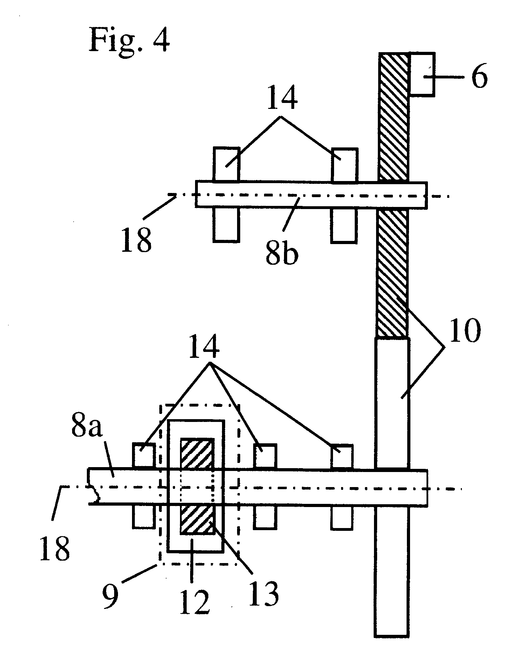

Figur 4 zeigt eine schematische Schnittansicht durch den Antriebsstrang einer Ausführungsform der vorliegenden Erfindung. Deutlich wird dabei, dass der Rotor 13 des Antriebsmotors 9 mit der Motorwelle 8a verbunden ist. Der Stator 12 des Antriebsmotor 9 tritt in Wechselwirkung mit dem Rotor 13 und treibt so die Motorwelle 8a an. Mit der Motorwelle 8a ist ein erstes Schwungrad 10 verbunden, so dass eine Rotation der Motorwelle 8a des Motors eine Rotation des erstes Schwungrades 10 bewirkt. Ein zweites Schwungrad 10 ist auf einer Antriebswelle 8b mit der Drehachse 18 angeordnet, wobei die Schwungräder als Zahnräder ausgestaltet sind und formschlüssig ineinander greifen, so dass eine volle Umdrehung des ersten Schwungrades 10 eine volle Umdrehung des zweiten Schwungrades 10 um die zweite Drehachse 18 bewirkt. Weiter ist mit dem zweiten Schwungrad 10 die Schubstange 6 verbunden, so dass eine Rotation des zweiten Schwungrades 10 in einer Linearbewegung der Schubstange 6 resultiert. Eine Lagerung der Motorwelle 8a und der Antriebswelle 8b mit den Lagern 14 reduziert die Auswirkungen negativer Störkräfte senkrecht zu den zwei Drehachsen 18 und/oder in Längsrichtung der zwei Drehachsen 18.

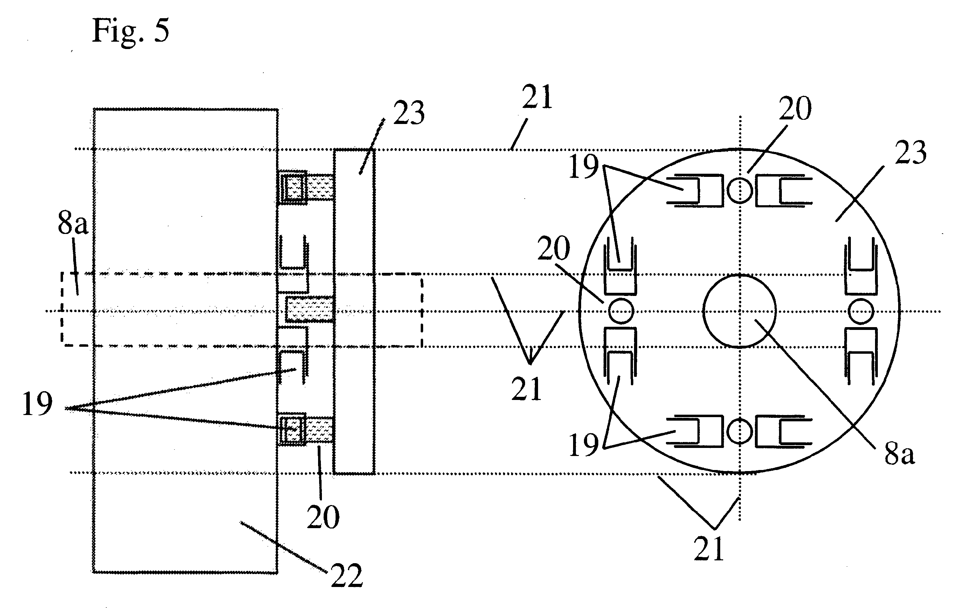

In Figur 5 ist eine Gruppenzeichnung einer erfindungsgemäßen Anordnung eines Antriebsmotors an einer Halterung dargestellt, wobei die Halterung hier das Gehäuse 22 des Kurbeltriebs ist. Ein Antriebsmotor 9 mit einem Gehäuse 23 ist auf der Motorwelle 8a angeordnet. Dabei ist der Motor 9 nicht gesondert gelagert, sondern wird von der Motorwelle gehalten. Die Motorwelle 8a verläuft durch das Gehäuse 22 des Kurbeltriebs und erlaubt sowohl eine vorder- als auch rückseitige Verwendung des von der Motorwelle 8a bereitgestellten Drehmoments.

Um das auf den Stator wirkende Drehmoment abzufangen ist der Stator über das Gehäuse 23 mit dem Gehäuse 22 des Kurbeltriebs verbunden.

Damit Drehmomentschwankungen und auf die Motorwelle 8a ausgeübte Kräfte und Momente nicht zu einer Zerstörung des Motors, insbesondere aber dessen Rotor und Gehäuse 23 führen, ist das Gehäuse 23 des Antriebsmotors 9 an dem Gehäuse 22 des Kurbeltriebs mit acht Dämpfungselementen 19 gelagert. Jede Lagerung weist eine Austragung 20 und zwei auf gegenüberliegenden Seiten der Austragung angeordnete Dämpfungselemente 19 auf. Durch eine entsprechenden Sensorik können Drehmomente und Kräfte, die auf die Dämpfungselemente wirken, erfasst werden. Mit einer Regelung bzw. Steuerung können die, hier hydraulischen, Dämpfungselemente 19 dynamisch an die Erfordernisse angepasst werden.

Für Zwecke der ursprünglichen Offenbarung wird darauf hingewiesen, daß sämtliche Merkmale, wie sie sich aus den vorliegenden Beschreibungen, den Zeichnungen und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen, der hier offenbarten Merkmale und Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen wird hier nur der Kürze und der Lesbarkeit der Beschreibung wegen verzichtet.

Während die Erfindung im Detail in den Zeichnungen und der vorangehenden Beschreibung dargestellt und beschrieben wurde, erfolgt diese Darstellung und Beschreibung lediglich beispielhaft und ist nicht als Beschränkung des Schutzbereichs gedacht, so wie er durch die Ansprüche definiert wird. Die Erfindung ist nicht auf die offenbarte Ausführungsform beschränkt.

Änderungen an der offenbarten Ausführungsform sind für den Fachmann aus den Zeichnungen, der Beschreibung und den beigefügten Ansprüchen offensichtlich. In den Ansprüchen schließt das Wort "aufweisen" nicht andere Elemente oder Schritte aus, und der unbestimmte Artikel "einer", "eine" oder "ein" schließt eine Mehrzahl nicht aus. Die bloße Tatsache, daß bestimmte Merkmale in unterschiedlichen Ansprüchen beansprucht sind, schließt ihre Kombination nicht aus. Bezugszeichen und Ansprüche sind nicht als Beschränkung des Schutzbereichs gedacht.

### Bezugszeichenliste

- 1: Walzgerüst
- 2: Walze
- 3: Walze
- 4: kalibrierter Walzdorn
- 5: Vorschubspannschlitten
- 6: Schubstange
- 7: Abstand dr
- 8: Welle
- 8a: Motorwelle
- 8b: Antriebswelle
- 9: Antriebsmotor
- 10: Schwungrad
- 11: Luppe
- 12: Stator
- 13: Rotor
- 14: Lager
- 15: Kupplung
- 16: Erstes Ende der Schubstange
- 17: Zweites Ende der Schubstange
- 18: Drehachse
- 19: Dämpfungselement
- 20: Aufsatz
- 21: Hilfslinie
- 22: Gehäuse des Kurbeltriebs
- 23: Gehäuse des Antriebsmotors

## Patentansprüche

1. Pilgerwalzanlage mit
einem Walzgerüst (1),
einem Schwungrad (10) auf einer Antriebswelle, welches um eine Drehachse (18) drehbar gelagert ist, und einer Schubstange (6) mit einem ersten (16) und einem zweiten Ende (17),
wobei das erste Ende (16) der Schubstange (6) in einem radialen Abstand (7) von der Drehachse (18) an dem Schwungrad (10) befestigt ist und wobei das zweite Ende (17) der Schubstange (6) an dem Walzgerüst (1) befestigt ist, so dass im Betrieb der Anlage eine Drehbewegung des Schwungrades (10) in eine Translationsbewegung des Walzgerüsts (1) umgesetzt wird,
mit einem Antriebsmotor (9), der eine Motorwelle (8a) aufweist, wobei die Motorwelle (8a) des Antriebsmotors (9) und die Antriebswelle (8b) so miteinander verbunden sind, dass eine Drehbewegung der Motorwelle (8a) zu einer Drehbewegung der Antriebswelle (8b) führt und so der Antriebsmotor (9) das Schwungrad (10) antreibt,
**dadurch gekennzeichnet, dass** :
der Antriebsmotor (9) ein Torquemotor ist,
die Motorwelle (8a) und die Antriebswelle (8b) einstückig ausgeführt sind oder über eine Kupplung (15) miteinander verbunden sind, so dass eine volle Umdrehung der Motorwelle (8a) eine volle Umdrehung der Antriebswelle (8b) bewirkt.

2. Pilgerwalzanlage nach Anspruch 1, **dadurch gekennzeichnet, dass** der Antriebsmotor (9) ein Hohlwellenmotor ist.

3. Pilgerwalzanlage nach Anspruch 1, **dadurch gekennzeichnet, dass** die Kupplung (15) die zwei Wellen (8a, 8b) kraftschlüssig miteinander verbindet.

4. Pilgerwalzanlage nach Anspruche 1 oder 3, **dadurch gekennzeichnet, dass** die Kupplung (15) die zwei Wellen (8a, 8b) formschlüssig miteinander verbindet.

5. Pilgerwalzanlage nach einem der Ansprüche 1 bis 4, **dadurch gekennzeichnet, dass** die Motorwelle (8a) und die Antriebswelle (8b) über ein Kegelradgetriebe miteinander verbunden sind.

6. Pilgerwalzanlage nach einem der Ansprüche 1 bis 5, **dadurch gekennzeichnet, dass** die Motorwelle (8a) und/oder die Antriebswelle (8b) so gelagert sind, dass Bewegungen in einer Richtung senkrecht zur Welle (8a, 8b) und/oder in Längsrichtung der Welle (8a, 8b) gedämpft werden.

7. Pilgerwalzanlage nach einem der Ansprüche 1 bis 6, **dadurch gekennzeichnet, dass** der Antriebsmotor (9) einen Rotor und einen Stator (12) aufweist, wobei der Stator (12) eine Lagerung aufweist, welche das auf den Stator (12) ausgeübte Drehmoment aufnimmt, wobei die Lagerung ein Dämpfungselement (19) aufweist.

8. Pilgerwalzanlage nach Anspruch 7, **dadurch gekennzeichnet, dass** der Antriebsmotor (9) ein Gehäuse (22) aufweist, wobei der Stator (12) über das Dämpfungselement (19) mit dem Gehäuse (22) verbunden ist.

9. Pilgerwalzanlage nach Anspruch 7 oder 8, **dadurch gekennzeichnet, dass** der Antriebsmotor (9) ein Gehäuse (22) aufweist, wobei der Stator (12) mit dem Gehäuse verbunden ist und wobei das Gehäuse (22) über das Dämpfungselement (19) mit einer Halterung, vorzugsweise einem Gehäuse (22) des Kurbeltriebs, verbunden ist.

10. Pilgerwalzanlage nach einem der Ansprüche 7 bis 9, **dadurch gekennzeichnet, dass** das Dämpfungselement (19) einen elastisch verformbaren Materialabschnitt aufweist.

11. Pilgerwalzanlage nach einem der Ansprüche 7 bis 70, **dadurch gekennzeichnet, dass** das Dämpfungselement (19) hydraulisch oder pneumatisch gedämpft ist.

## Claims

1. A pilger rolling mill comprising
a roll stand (1),
a flywheel (10) on a drive shaft which is mounted rotatably about an axis of rotation (18), and a thrust rod (6) having a first end (16) and a second end (17),
wherein the first end (16) of the thrust rod (6) is fixed to the flywheel (10) at a radial spacing (7) from the axis of rotation (18) and wherein the second end (17) of the thrust rod (6) is fixed to the roll stand (1) so that in operation of the mill a rotary movement of the flywheel (10) is converted into a translatory movement of the roll stand (1),
comprising a drive motor (9) having a motor shaft (8a), wherein the motor shaft (8a) of the drive motor (9) and the drive shaft (8b) are connected together in such a way that a rotary movement of the motor shaft (8a) leads to a rotary movement of the drive shaft (8b) and thus the drive motor (9) drives the flywheel (10),
**characterised in that**
the drive motor (9) is a torque motor, the motor shaft (8a) and the drive shaft (8b) are in one piece or are connected together by way of a coupling (15) so that a full revolution of the motor shaft (8a) causes a full revolution of the drive shaft (8b).

2. A pilger rolling mill as set forth in claim 1 **characterised in that** the drive motor (9) is a hollow-shaft motor.

3. A pilger rolling mill as set forth in claim 1 **characterised in that** the coupling (15) connects the two shafts (8a, 8b) together in force-locking relationship.

4. A pilger rolling mill as set forth in claim 1 or claim 3 **characterised in that** the coupling (15) connects the two shafts (8a, 8b) together in positively locking relationship.

5. A pilger rolling mill as set forth in one of claims 1 through 4 **characterised in that** the motor shaft (8a) and the drive shaft (8b) are connected together by way of a bevel gear transmission.

6. A pilger rolling mill as set forth in one of claims 1 through 5 **characterised in that** the motor shaft (8a) and/or the drive shaft (8b) are so mounted that movements in a direction perpendicularly to the shaft (8a, 8b) and/or in the longitudinal direction of the shaft (8a, 8b) are damped.

7. A pilger rolling mill as set forth in one of claims 1 through 6 **characterised in that** the drive motor (9) has a rotor and a stator (12), wherein the stator (12) has a mounting which receives the torque exerted on the stator (12), wherein the mounting has a damping element (19).

8. A pilger rolling mill as set forth in claim 7 **characterised in that** the drive motor (9) has a housing (22), wherein the stator (12) is connected to the housing (22) by way of the damping element (19).

9. A pilger rolling mill as set forth in claim 7 or claim 8 **characterised in that** the drive motor (9) has a housing (22), wherein the stator (12) is connected to the housing and wherein the housing (22) is connected by way of the damping element (19) to a holding means, preferably a housing (22) of the crank drive.

10. A pilger rolling mill as set forth in one of claims 7 through 9 **characterised in that** the damping element (19) has an elastically deformable material portion.

11. A pilger rolling mill as set forth in one of claims 7 through 10 **characterised in that** the damping element (19) is hydraulically or pneumatically damped.

## Revendications

1. Installation de laminoir à pas de pèlerin, comprenant :
une cage de laminoir (1), un volant (10) porté par un arbre d'entraînement et qui est logé pour tourner autour d'un axe de rotation (18), et une bielle (6) qui présente une première extrémité (16) et une seconde extrémité (17), la première extrémité (16) de la bielle (6) étant fixée au volant (10) à une distance radiale (7) de l'axe de rotation (18) et la seconde extrémité (17) de la bielle (6) étant fixée à la cage de laminoir (1), de telle sorte que, dans le fonctionnement de l'installation, un mouvement de rotation du volant (10) est converti en un mouvement de translation de la cage de laminoir (1),
un moteur d'entraînement (9) qui présente un arbre de moteur (8a), l'arbre de moteur (8a) du moteur d'entraînement (9) et l'arbre d'entraînement (8b) étant reliés l'un à l'autre de telle manière qu'un mouvement de rotation de l'arbre de moteur (8a) conduit à un mouvement de rotation de l'arbre d'entraînement (8b) et qu'ainsi le moteur d'entraînement (9) entraîne le volant (10),
**caractérisée en ce que**
le moteur d'entraînement (9) est un moteur couple,
l'arbre de moteur (8a) et l'arbre d'entraînement (8b) sont d'une seule pièce ou sont reliés l'un à l'autre par l'intermédiaire d'un accouplement (15), de sorte qu'un tour complet de l'arbre de moteur (8a) entraîne un tour complet de l'arbre d'entraînement (8b).

2. Installation de laminoir à pas de pèlerin selon la revendication 1, **caractérisée en ce que** le moteur d'entraînement (9) est un moteur à arbre creux.

3. Installation de laminoir à pas de pèlerin selon la revendication 1, **caractérisée en ce que** l'accouplement (15) relie les deux arbres (8a, 8b) par une liaison opérant par adhérence.

4. Installation de laminoir à pas de pèlerin selon les revendications 1 ou 3, **caractérisée en ce que** l'accouplement (15) relie les deux arbres (8a, 8b) l'un à l'autre par une liaison opérant par engagement positif.

5. Installation de laminoir à pas de pèlerin selon l'une des revendications 1 à 4, **caractérisée en ce que** l'arbre de moteur (8a) et l'arbre d'entraînement (8b) sont reliés l'un à l'autre par un engrenage à roues coniques.

6. Installation de laminoir à pas de pèlerin selon l'une des revendications 1 à 5, **caractérisée en ce que** l'arbre de moteur (8a) et/ou l'arbre d'entraînement (8b) est ou sont logé(s) de telle manière que les déplacements dans une direction perpendiculaire à l'arbre (8a, 8b) et/ou dans la direction longitudinale de l'arbre (8a, 8b) sont amortis.

7. Installation de laminoir à pas de pèlerin selon l'une des revendications 1 à 6, **caractérisée en ce que** le moteur d'entraînement (9) présente un rotor et un stator (12), le rotor (12) présentant un palier qui absorbe le couple exercé sur le stator (12), le palier présentant un élément d'amortissement (19).

8. Installation de laminoir à pas de pèlerin selon la revendication 7, **caractérisée en ce que** le moteur d'entraînement (9) présente un carter (22), le stator (12) étant relié au carter (22) par l'intermédiaire de l'élément d'amortissement (19).

9. Installation de laminoir à pas de pèlerin selon la revendication 7 ou 8, **caractérisée en ce que** le moteur d'entraînement (9) présente un carter (22), le stator (12) étant relié au carter et le carter (22) étant relié à un support, de préférence à un carter (22) du mécanisme à manivelle, par l'intermédiaire de l'élément d'amortissement (19).

10. Installation de laminoir à pas de pèlerin selon l'une des revendications 7 à 9, **caractérisée en ce que** l'élément d'amortissement (19) présente une partie de matière élastiquement déformable.

11. Installation de laminoir à pas de pèlerin selon l'une des revendications 7 à 10, **caractérisée en ce que** l'élément d'amortissement (19) est amorti par voie hydraulique ou pneumatique.
